# EUROPÄISCHE PATENTSCHRIFT

(11) **EP 3 157 281 B1**
(45) Veröffentlichungstag und Bekanntmachung des Hinweises auf die Patenterteilung: **16.12.2020**
(21) Anmeldenummer: 16189380.5
(22) Anmeldetag: 19.09.2016
(51) Int. Cl.: H04W 12/06, H04L 9/08, H04L 9/32

(54) **VERFAHREN ZUR GESCHÜTZTEN KOMMUNIKATION EINES FAHRZEUGS**
METHOD FOR SECURE COMMUNICATION OF A VEHICLE
PROCÉDÉ DE COMMUNICATION PROTÉGÉE DANS UN VÉHICULE

(30) Priorität: 16.10.2015 DE 102015220224
(43) Veröffentlichungstag der Anmeldung: 19.04.2017
(73) Patentinhaber: Volkswagen Aktiengesellschaft, 38440 Wolfsburg (DE)
(72) Erfinder: Tschache, Alexander, 38436 Wolfsburg (DE); Winkelvos, Timo, 38104 Braunschweig (DE)

(56) Entgegenhaltungen:
- DE-A1-102007 058 975
- US-A1- 2010 191 973
- Anonymous: "Cryptographic nonce - Wikipedia, the free encyclopedia", , 27. Juli 2015 (2015-07-27), XP055290118, Gefunden im Internet: URL:https://en.wikipedia.org/w/index.php?t itle=Cryptographic_nonce&oldid=673303095 [gefunden am 2016-07-20]
- ARAZI B: "VEHICULAR IMPLEMENTATIONS OF PUBLIC KEY CRYPTOGRAPHIC TECHNIQUES", IEEE TRANSACTIONS ON VEHICULAR TECHNOLOGY, IEEE SERVICE CENTER, PISCATAWAY, NJ, US, Bd. 40, Nr. 3, 3. August 1991 (1991-08-03) , Seiten 646-653, XP000266039, ISSN: 0018-9545, DOI: 10.1109/25.97519

## Beschreibung

Die Erfindung betrifft ein Verfahren zur geschützten Kommunikation eines Fahrzeugs.

Für eine zunehmenden Zahl von Funktionen in Fahrzeugen, die Schutz durch kryptografische Funktionen benötigen, muss für diese Funktionen jeweils kryptografisches Schlüsselmaterial bereitgestellt werden. Für aktuelle Funktionen werden entweder eigenständige Lösungen entwickelt oder es werden bestehende Systeme verwendet, die an sich nicht optimal dafür ausgelegt sind.

DE 100 08 973 A1 offenbart ein Verfahren zur Sicherstellung der Datenintegrität einer Software für ein Steuergerät eines Kraftfahrzeugs, bei dem mittels eines Steuergeräte-Schlüsselpaares und Zertifikaten in das Steuergerät einzuspielende Software authentifiziert wird.

DE 10 2009 038 035 A1 offenbart ein Verfahren zur Konfiguration von Infotainmentanwendungen in einem Kraftfahrzeug, bei dem der Softwareumfang geändert wird.

DE 10 2009 037 193 A1 offenbart ein Verfahren zum Durchführen eines Austauschs eines asymmetrischen Schlüssels zwischen einem Fahrzeug und einer entfernten Einrichtung, wobei ein vom Fahrzeug erzeugter öffentlicher Schlüssel und beschreibende Daten an einer Stelle gespeichert werden, auf die die entfernte Einrichtung zugreifen kann.

DE 10 2010 005 422 A1 betrifft ein Verfahren zum Aufbauen einer sicheren Verbindung mit einer mobilen Vorrichtung, die dazu konfiguriert ist, einen ersten privaten Schlüssel zu speichern, der mathematisch einem ersten öffentlichen Schlüssel entspricht.

DE 10 2007 058 975 A1 betrifft ein Bordnetz-System eines Kraftfahrzeugs mit Steuergeräten, die über einen Datenbus miteinander kommunizieren. Zur Erkennung von Manipulationen am Bordnetz eines Kraftfahrzeugs und zur Ableitung geeigneter Maßnahmen wird in einem ersten Steuergerät ein Master Security Modul und in einer Vielzahl der weiteren zweiten Steuergeräte jeweils ein Client Security Modul vorgesehen, wobei das Master Security Modul des ersten Steuergeräts eine Nachricht signiert und die signierte Nachricht an mindestens eines der zweiten Steuergeräte über den Datenbus sendet.

DE 10 2007 041 177 B4 offenbart ein Verfahren zum ETCS-Online-Schlüsselmanagement für eine Funk-Zugsteuerung, bei dem für die Etablierung jeder neuen Funkverbindung zwischen den Entitäten Streckenzentrale (RBC) und ETCS-Fahrzeug entitätenspezifische Authentifizierungsschlüssel verwendet werden, die von einer Schlüsselzentrale über eine Datenverbindung an die Entitäten übertragen werden.

Aus der US 2010/191973 A1 ist ein Verfahren und eine Vorrichtung zum Herstellen einer sicheren Verbindung mit einem Mobilgerät bekannt, das zum Speichern eines ersten privaten Schlüssels konfiguriert ist, der mathematisch einem ersten öffentlichen Schlüssel entspricht. Das Verfahren umfasst das Empfangen eines quasi öffentlichen Schlüssels von einer vertrauenswürdigen Entität und das Empfangen eines ersten digitalen Zertifikats von dem mobilen Gerät.

Aus der DE 10 2007 058 975 A1 ist es bekannt zur Absicherung eines Bordnetz-Systems eines Kraftfahrzeugs mit Steuergeräten ein Master Security Modul einzusetzen, das mit den Client Security Modulen einen geheimen symmetrischen Kommunikationsschlüssel zur Verschlüsselung der Kommunikation zwischen dem Master Security Modul und dem Client Security Modul, austauscht. Bei einer bevorzugten Ausführungsform wird der Austausch des geheimen symmetrischen Schlüssels durch einen oder mehrere Diagnosebefehle angestoßen, vorzugsweise im Werk oder in einer Werkstatt des Fahrzeugherstellers.

Die oben genannten Verfahren authentifizieren einzuspielende Software, jedoch nicht den Aufbau einer authentifizierten Kommunikation.

Der Erfindung liegt nun die Aufgabe zugrunde, ein sicheres Schlüsseleinbringungssystem und Schlüsselmanagementsystem zur Verfügung zu stellen.

Diese Aufgabe wird gelöst durch ein Verfahren gemäß Anspruch1.

Das erfindungsgemäße Verfahren zur geschützten Kommunikation eines Fahrzeugs umfasst die Schritte:
- Erzeugen eines Schlüsselpaars bestehend aus privatem Schlüssel und öffentlichem Schlüssel und/oder eines oder mehrerer symmetrischer Schlüssel für das Fahrzeug oder für ein Steuergerät des Fahrzeugs im Einflussbereich des Fahrzeugherstellers,
- Erzeugen eines ersten Zertifikats mit dem Schlüsselpaar,
- Einbringen des Schlüsselpaars und des ersten Zertifikats und/oder des oder der mehreren symmetrischen Schlüssel in das Fahrzeug oder das Steuergerät,
- Authentisieren des Fahrzeugs oder des Steuergeräts gegenüber einem neuen Kommunikationspartner durch die Generierung eines neuen Schlüsselpaares für diesen Kommunikationsweg und das Absenden einer signierten Nachricht zusammen mit dem Zertifikat, und
- Authentisieren eines neuen Kommunikationspartners gegenüber dem Fahrzeug oder dem Steuergerät mit einer signierten Nachricht und einem öffentlichen Schlüssel, die der neue Kommunikationspartner basierend auf einer Zertifizierung durch den Fahrzeughersteller erstellt.

Die Erfindung schafft gewissermaßen einen Vertrauenskreis, der eine bidirektionale Kommunikation erlaubt, das heißt von dem Fahrzeug zu einem weiteren Teilnehmer und von einem Teilnehmer zu dem Fahrzeug. Der weitere Teilnehmer oder Kommunikationspartner kann ein anderes Fahrzeug, eine feste Einrichtung wie die Produktionsstätte oder ein Server einer Werkstatt oder eines Drittanbieters, externe Dienste und neue Dienstanbieter oder auch ein Steuergerät innerhalb des Fahrzeugs sein.

Erfindungsgemäß wird ein Masterschlüssel im Einflussbereich des Fahrzeugherstellers erzeugt und alle in Fahrzeugen eingesetzten Schlüssel werden durch deterministische Ableitung aus dem Masterschlüssel erzeugt. Ein derartiges Vorgehen vereinfacht die Organisation der Schlüsselverwaltung. So kann eine einfache Repräsentation dieses Masterschlüssels in einer zentralen Datenbank vorgenommen werden. Dieser Masterschlüssel dient dann als Ableitungsbasis für alle Schlüssel aller Fahrzeuge oder einer bestimmten Gruppe von Fahrzeugen, wie zum Beispiel einem Modell oder einer Modellreihe des Herstellers.

Das erfindungsgemäße Verfahren hat den Vorteil, dass ein Schlüsseleinbringungssystem und Schlüsselmanagementsystem zur Verfügung gestellt wird, das ein prozesssichere Schlüsselverteilung bei einheitlicher Programmierschnittstelle (API, Application Programming Interface) zur Verfügung stellt. Die Nutzung von Schlüsselmaterial ist ohne weitere Kommunikation außer der Authentizitätsüberprüfung mit verschiedenen Steuergeräten des Fahrzeugs auch mit neuen, das heißt dem Fahrzeug bis dahin unbekannten, externen Teilnehmern möglich. Die Vertrauensbasis stammt vom Hersteller des Fahrzeugs und der Hersteller hat die Vertrauensketten vollständig unter eigener Kontrolle. Damit kontrolliert er selber die Vertrauensbeziehungen der Fahrzeuge. Das Verfahren erlaubt damit erstmalig eine Vielzahl von Authentifizierungskonzepten.

Im Rahmen der Erfindung können asymmetrische und symmetrische Schlüssel verwendet werden. Die Schlüssel können jeweils einzeln oder in mehrfacher Ausführung pro Steuergerät beziehungsweise Fahrzeug verwendet werden. Auch wenn stellenweise aus Gründen der Übersichtlichkeit nur eine Variante, wie zum Beispiel ein asymmetrisches Schlüsselpaar, erwähnt ist, sind stets beide Varianten, das heißt asymmetrische und symmetrische Schlüssel, umfasst. Die signierte Nachricht an den neuen Kommunikationspartner beziehungsweise an das Fahrzeug oder das Steuergerät kann mit einer Signatur oder einem Zertifikat signiert werden. Die Signatur ermöglicht eine Überprüfung, ob die Nachricht von einem authentischen Absender geschickt wurde.

Das Schlüsseleinbringungssystem und Schlüsselmanagementsystem kann unterschiedliche Einsatzzwecke vorteilhaft unterstützen, wie zum Beispiel eine geschützte Kommunikation innerhalb des Fahrzeugs. Nur durch den Einsatz unterschiedlicher Schlüssel bei der kryptographischen Authentifizierung von Nachrichten auf dem fahrzeuginternen Bus lässt sich eine authentische Unterscheidung von Kommunikationsteilnehmern erreichen. Unter Beachtung der klassischen Anforderungen an Kryptographie (die Sicherheit beruht auf den Schlüsseln) wird ausgeschlossen werden, dass ein Steuergerät, welches Teilnehmer des Vertrauenskreises und der geschützten Kommunikation ist, aber sich nicht in einer gleichen Vertrauensgruppe wie andere Steuergeräte befindet, nicht das Schlüsselmaterial herleiten kann, das nötig ist, um sich als ein Teilnehmer dieser anderen Vertrauensgruppe auszugeben.

Auch mobile Online Dienste werden von dem erfindungsgemäßen Verfahren unterstützt. Oft sind die mobilen Onlinedienste nachträglich, zum Beispiel über bereits bestehende Systeme an Backendsysteme des Fahrzeugherstellers angebunden. Diese Vorgehen erfüllen zwar alle sicherheitsrelevanten Anforderungen. Jedoch werden die bestehenden Systeme hierfür zweckentfremdet, was für diese Systeme negative Auswirkungen haben kann. Bei einer dedizierten PKI, deren Teilnehmer die Fahrzeuge sind, entfällt dieser Nachteil. Insbesondere vorteilig ist, dass die Fahrzeuge bereits beim Erstkontakt mit einem Backend oder Einheit für mobile Online Dienste noch vor einer Durchleitung an interne IT-Systeme authentifizierbar sind.

Ebenso kann eine Authentifizierung von Kommunikationsdiensten oder-netzen wie zum Beispiel Car2X oder vehicle to grid realisiert werden.

Weitere zukünftige Anwendungsfälle zeichnen sich dadurch aus, dass sich Systeme des Fahrzeugs gegenüber externen Kommunikationsteilnehmern authentisieren müssen. Für solche Anwendungsfälle eignet sich asymmetrische Kryptographie deshalb, weil kryptographische Operationen wegen der öffentlichen Schlüsselanteile ohne vorherige dedizierte Schlüsseleinbringung zwischen Teilnehmern durchgeführt werden können. Eine Vertrauensinfrastruktur (PKI) ermöglicht zusätzlich, dass die Teilnehmer den entsprechende öffentliche Schlüsseln vertrauen können. Die derzeit vorhandenen Verfahren ermöglichen weder das Einbringen von asymmetrischen Schlüsseln, noch das Einbinden der Fahrzeuge in eine PKI und geschützte Kommunikation mit externen Teilnehmern.

Es gibt Anwendungsfälle mobiler Endgeräte, für die eine erstmalige Kopplung der Geräte nicht wie heute von innerhalb des Fahrzeugs (mit zusätzlicher sog. Out-of-band Bestätigung des Nutzers) möglich ist. Ein solches Beispiel sind Schlüsselübergaben an Smartphones für das Carsharing. Ohne die Bestätigung des Kopplungsvorganges auf Fahrzeugseite und am Handy sind die transportierten oder vereinbarten Schlüssel nicht authentisch und somit anfällig für Man-in-the-Middle Angriffe. Mit der hier vorgestellten PKI lässt sich dies beheben, indem zum Beispiel die Sicherheit nicht auf der Authentizität des technologiespezifischen Kopplungsmechanismus beruht, sondern eine darüber liegende geschützte Verbindung der Teilnehmer auf Basis der Zertifikate des Vertrauenskreises durchgeführt wird.

Auch bei der Anbindung zukünftiger externer Dienste oder Apps gibt es einige Anwendungsfälle, die nur durch das erfindungsgemäße Verfahren möglich sind. So ist bei Apps und Diensten, die nicht aus dem eigenen Backend bedient werden, eine authentische Verbindung mit entsprechenden Authentifizierungsmechanismen nötig (zum Beispiel OAuth). Für vom Fahrzeughersteller selbst gehostete Dienste gibt es je nach Kritikalität die Anforderung an eine Ende-zu-Ende Sicherheit. Hier bietet das vorgestellte Schlüsseleinbringungssystem und Schlüsselmanagementsystem große Flexibilität und Erweiterbarkeit.

Das erfindungsgemäße Verfahren bietet eine zentral gesteuerte Steuergeräteauthentifizierung. Dies ist insbesondere von Vorteil, wenn Steuergeräte externer Hersteller, wie zum Beispiel Infotainmentsysteme anderer Hersteller, erkannt werden sollen. Dies ist durch den Einsatz der hier vorgestellten geschützten Kommunikation innerhalb des Fahrzeugs auf Basis von unabhängigen Schlüsseln des Vertrauenskreises möglich. Hier stellen andere Geräte fest, dass ein Teilnehmer nicht authentisch ist, anstelle dass der Teilnehmer selbst feststellt, dass er sich im falschen Fahrzeug befindet.

Gemäß dem Verfahren funktioniert das Fahrzeug beziehungsweise ein Steuergerät des Fahrzeugs als eigene Zertifizierungsinstanz einer Public-Key-Infrastruktur (PKI, Public Key Infrastructure). Dies ist insbesondere dann von Vorteil, wenn eine Onlineverbindung nicht jederzeit und überall möglich ist. Dies trifft für alle Endgeräte zu, die mobil sind und die nicht originär für den Aufbau einer Online-Verbindung vorgesehen sind.

Ein Schlüsseldatensatz kann zur Einbringung des Schlüsselpaars, des symmetrischen Schlüssels und des Zertifikats verwendet werden. Dies erlaubt eine standardisierte Schnittstelle oder Interface zur Einbringung, was das Verfahren erleichtert. Das Verfahren ist nicht auf die Verwendung von asymmetrischen Schlüsseln beschränkt, zusätzlich können auch symmetrische Schlüssel zum Einsatz gelangen. Der Schlüsseldatensatz kann alle genannten oder auch nur einzelne Bestandteile umfassen.

In dem Schlüsseldatensatz können Informationen betreffend eine Identifikationsnummer des Fahrzeugs und/oder Steuergeräts und/oder der Schlüsselart enthalten sein. Die Identifikationsnummer kann zum Beispiel die Fahrzeug-Identifikationsnummer (VIN oder FIN) sein. Die Bedatung des Fahrzeugs und/oder des Steuergeräts oder anderen Teilnehmern erfolgt über verschlüsselte und signierte Schlüsseldatensätze. Über diese kann das Steuergerät über sein kryptografisches Schlüsselmaterial hinaus Informationen über den Verschlüsselungsverbund, in dem es verbaut ist, sowie Meta-Informationen zu seinen Schlüsseln für die verwendende Applikation erhalten, sofern diese benötigt werden.

Bei der Herstellung eines Steuergeräts des Fahrzeugs kann ein initialer Schlüssel im Steuergerät hinterlegt werden und der initiale Schlüssel kann durch das Schlüsselpaar und/oder den symmetrischen Schlüssel ungültig werden. Der initiale Schlüssel wird bei oder nach der Herstellung im Steuergerät hinterlegt und erweitert somit den Sicherheits- beziehungsweise Authentifizierungsbereich auf Komponenten, bevor sie in das Fahrzeug eingebaut werden. Dadurch wird die Sicherheit weiter erhöht. Der initiale Schlüssel kann auch gelöscht werden.

Ein Schlüssel für steuergerätübergreifende Funktionen kann erzeugt und in mehrere Steuergeräte des Fahrzeuges eingebracht werden. Da mit einem derartigen Gruppenschlüssel eine Gruppe von Steuergeräten bedient werden kann, kann die Anzahl der Schlüssel und der Aufwand reduziert werden. Beispielsweise können ein Navigationssteuergerät und ein GPS-Steuergerät zu einem Gruppenschlüssel gehören, so dass beide bei einer Funktion mit GPS-Navigation mittels des Gruppenschlüssels angesprochen werden können.

Mehrere Schlüsselpaare und/oder Schlüssel können in ein Steuergerät des Fahrzeuges eingebracht werden. Auf diese Weise kann der Funktionsumfang der Verschlüsselung erweitert werden. Zum Beispiel können ein Schlüssel für ein einziges Steuergerät, ein Schlüssel für steuergerätübergreifende Funktionen und ein oder mehrere Kommunikationsschlüssel zum Einsatz kommen. Jedem Schlüssel beziehungsweise Schlüsselpaar ist ein spezielles Einsatzgebiet und/oder ein bestimmter Teilnehmer- oder Kommunikationskreis zugeordnet.

Der neue Kommunikationspartner kann ein weiteres Steuergerät im Fahrzeug oder eine zu dem Fahrzeug externe Einrichtung sein. Zum Beispiel kann im Fahrzeug eine Master-Slave-Konfiguration vorhanden sein, in der ein Steuergerät hinsichtlich der Verschlüsselung beziehungsweise der verschlüsselten Kommunikation die Masterposition übernimmt während weitere Steuergeräte Slavepositionen übernehmen. Die externe Einrichtung kann zum Beispiel ein anderes Fahrzeug, eine Werkstatt oder ein Server eines Diensteanbieters sein. Das allgemein gültige Verfahren kann mit jedem Kommunikationspartner zusammenarbeiten, der über einen kabelgebundenen oder kabellosen Kommunikationskanal, wie zum Beispiel eine Mobilfunkverbindung, erreichbar ist und eingerichtet ist, verschlüsselt zu kommunizieren, zum Beispiel mittels asymmetrischer Verschlüsselung.

Der Einflussbereich des Fahrzeugherstellers kann einen Produktionsort des Fahrzeugs und/oder ein Backend des Herstellers umfassen. Der Begriff Einflussbereich kann sicherheitstechnisch ausgelegt werden und nicht ausschließlich geographisch. Zum Beispiel kann in einem Backend unter sicheren Verhältnissen die Schlüssel, Zertifikate und Downloadcontainer erstellt werden, die am Produktionsort in das Fahrzeug eingebracht werden. Die Schlüsselableitung kann zum Beispiel auch während der Produktion direkt im Fahrzeug geschehen.

Ein Root-Zertifikat des Herstellers kann in das Fahrzeug eingebracht werden und das Root-Zertifikat kann an den neuen Kommunikationspartner gesandt werden. Mittels des Root-Zertifikats kann die Gültigkeit aller untergeordneten Zertifikate validiert werden. Das Root- oder Wurzelzertifikat bildet den gemeinsamen Vertrauensanker aller ihm untergeordneter Zertifikate. Mit dieser Variante kann eine vollständig hierarchische PKI realisiert werden.

Eine Zertifizierungsstelle des Fahrzeugherstellers kann ein Hersteller-Zertifikat erzeugen und an den neuen Kommunikationspartner übertragen und der neue Kommunikationspartner kann das vom Fahrzeug erhaltene zweite Zertifikat mit dem Root-Zertifikat, dem Hersteller-Zertifikat, dem Zertifikat und der Signatur der Nachricht überprüfen. Auf diese Weise kann die gesamte Zertifizierungskette nachgeprüft werden und große Flexibilität bei der Schlüsselerstellung und - verwaltung gegeben werden.

Bei einer Erzeugung des Schlüsselpaares und/oder des symmetrischen Schlüssels für das Fahrzeug oder für ein Steuergerät des Fahrzeugs kann eine Seriennummer des Fahrzeugs und/oder des Steuergeräts im Einflussbereich des Fahrzeugherstellers gespeichert werden. Ein derartiges Verbuchen oder Ablegen der Seriennummer in einer Datenbank oder dem Backend erleichtert die Organisation des Vertrauenskreises.

Bei einer erneuten Anfrage nach einem Schlüsselpaar und/oder Schlüssel kann, wenn eine Seriennummer des Fahrzeugs oder des Steuergeräts nicht mit der gespeicherten Seriennummer übereinstimmt, vor der Berechnung eines neuen, an das Fahrzeug oder an das Steuergerät zu übertragenden Schlüsselpaares und/oder Schlüssels, ein Schlüsselidentitätszähler des Schlüsselpaares hochgezählt werden. Alle anderen System-Teilnehmer des Verschlüsselungsverbunds, die diese Schlüssel enthalten, werden ebenfalls entsprechende Schlüsselpaare beziehungsweise Schlüsseldatensätze bekommen, die diese neuen Schlüssel erhalten. Auf diese Weise können Schlüssel oder Schlüsselpaare einfach und sicher ersetzt werden, was die Prozesssicherheit der Schlüssel im gesamten Lebenszyklus sicherstellt.

Das Fahrzeug oder das Steuergerät kann das neue Schlüsselpaar und/oder Schlüssel nur akzeptieren, wenn der enthaltene Schlüsselidentitätszähler größer oder gleich dem aktuell gespeicherten Schlüsselidentitätszähler ist. Mit dieser Sicherheitsabfrage kann der Schlüsselidentitätszähler einfach und wirkungsvoll implementiert werden und die Prozesssicherheit erhöht werden. Eine weitere Möglichkeit besteht darin, dass alle Schlüssel beziehungsweise Schlüsselpaare getauscht werden.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines PKI-Vertrauenskreises;
- Figur 2: eine schematische Übersicht von eingebrachten Schlüsseln; und
- Figur 3: eine schematische Darstellung von Schlüsselfunktionen in Steuergeräten.

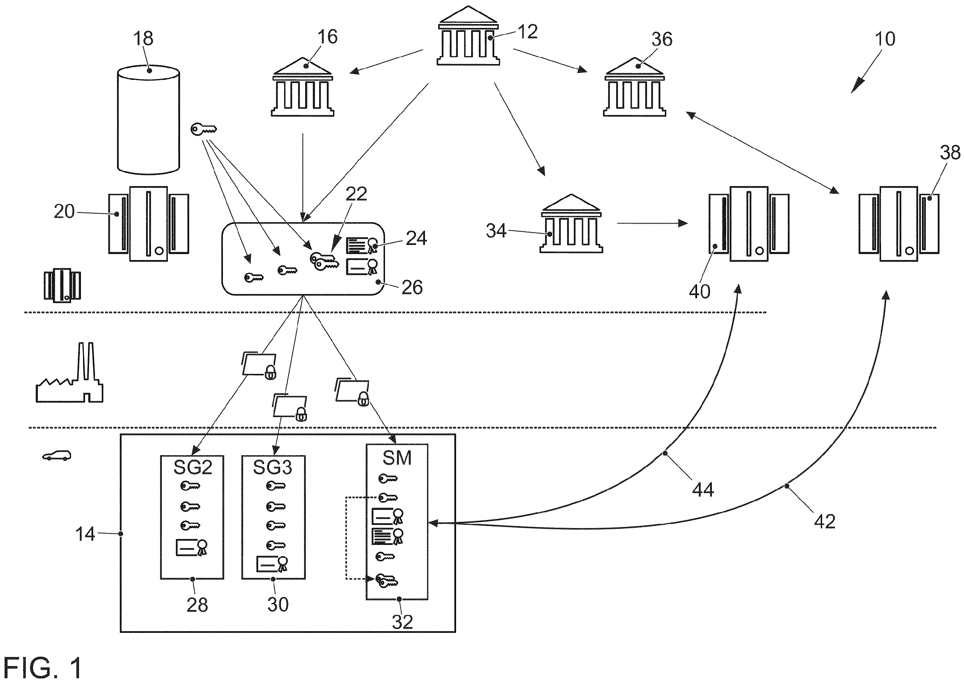

Figur 1 zeigt eine schematische Darstellung eines PKI-Vertrauenskreises 10, das auch als Fahrzeug-Schlüssel-Managementsystem bezeichnet werden kann. Eine Root-Zertifizierungsstelle (CA) 12 dient als Vertrauensanker für die gesamte Public-Key-Infrastruktur (PKI). Die Root-Zertifizierungsstelle 12 liegt im Zuständigkeitsbereich, zum Beispiel in einem Rechenzentrum, des Herstellers von Fahrzeugen 14. Es existieren mehrere Sub-CAs, die für die verschiedenen Anwendungsfälle die Zertifikate ausstellen. So unterschreibt eine Fahrzeug-CA 16 die Zertifikate für die asymmetrischen Fahrzeugidentitäten. Die gesamte PKI 10 umfasst die gemeinsame Root-CA 12 und mehrere Sub-CAs für dedizierte Anwendungsfälle. Zudem gehören alle ausgestellten Zertifikate zur PKI 10.

Eine Schlüsseldatenbank 18 dient dazu, neue Schlüssel oder Schlüsselpaare zu erzeugen, zu speichern, zu verwalten und zur Verfügung zu stellen. Die Schlüsseldatenbank 18 kann in bestehende Datenbanksysteme des Herstellers integriert sein. Ebenso ist es möglich, die Schlüsselverwaltung zum Beispiel in ein verbundenes oder damit beauftragtes Unternehmen auszulagern.

In einer Backend-Einheit 20, wie zum Beispiel einer Recheneinheit oder einem Rechenzentrum, werden die Schlüssel oder Schlüsselpaare 22 abgeleitet, mit den Zertifikaten 24 zusammengefasst und als Schlüsseldatensatz 26 zur Verfügung gestellt werden. Die Einheiten Root-CA 12, Fahrzeug-CA 16, Schlüsseldatenbank 18 und Backend-Einheit 20 können auch zu einer einzigen oder wenigen Einheiten zusammengefasst werden. Sie sind hier wegen der logischen Trennung einzeln dargestellt. Sämtliche bereits beschriebenen Einheiten sind logisch vor der Produktion der Fahrzeuge 14 angesiedelt, dies wird gemeinüblich als Backend bezeichnet. Als Backend kann zum Beispiel auch ein Backend eines Telematikdienstanbieters angesehen werden.

Das zentrale Backend generiert auf Anfrage für ein Fahrzeug 14 und seine Steuergeräte 28, 30, 32 die benötigten kryptografischen Schlüssel 22. Für eine Erstbedatung wird dem Backend sowohl die Fahrzeugidentifikationsnummer VIN des Fahrzeugs 14 als auch eine Verbauliste der zu bedatenden Steuergeräte 28, 30, 32 und bereitzustellender Schlüssel mitgeteilt. Diese Daten werden nach der Schlüsselerzeugung in der Schlüsseldatenbank 18 zur späteren Referenz gespeichert.

Vom Backend werden Schnittstellen für sowohl Bedatungsprozesse während der Produktion des Fahrzeugs 14 zur Erstbedatung als auch für nachträgliche Bedatungsprozesse im Feldbetrieb bereitgestellt. Letztere Schnittstelle ist insbesondere für Tausch- und Ersatzteilprozesse notwendig.

Die Fahrzeug-CA 16 stellt als Teil der PKI 10 an einzelne Steuergeräte signierte Zertifikate 24 auf Basis des Schlüsselmaterials bereit, die zur Identifikation des Fahrzeugs 14 beziehungsweise dessen Steuergeräte 28, 30, 32 gegenüber anderen Entitäten verwendet werden können. Dazu enthält die PKI 10 mindestens folgende Entitäten enthalten. Die Root-CA 12 dient als Vertrauensbasis, weitere funktionsabhängige CAs, wie zum Beispiel die Fahrzeug-CA 16 oder eine CA für mobile Online Dienste 34 zur Unterstützung von mobilen Onlinediensten, sind vorhanden und eine Bridge oder Schnittstelle 36 dient als Schnittstelle für externe Teilnehmer 38. Die Bridge oder Schnittstelle 36 wird verwendet, um die Zertifikate der externen Teilnehmer 38 von der Hersteller PKI 10 zu unterschreiben, um somit auch eine Authentisierung der externen Dienste 38 gegenüber dem Fahrzeug 14 zu ermöglichen.

Auch mindestens ein interner Dienstanbieter 40 zur Bereitstellung interner Dienste ist Bestandteil der PKI beziehungsweise des Vertrauenskreises 10. Unter intern wird hier verstanden, dass der Hersteller des Fahrzeugs 14 diese Dienste, wie zum Beispiel mobile Onlinedienste, anbietet. Dieser interne Dienstanbieter 40 ist über die CA für mobile Onlinedienste 34 an die Root-CA 12 angebunden.

Da die internen und externen Dienste, ebenso wie das Fahrzeug 14 mit seinen Steuergeräten 28, 30, 32, jeweils einen vollständigen Zertifizierungspfad zur Root-CA 12 besitzen, kann sich das Fahrzeug asymmetrischer Kryptoverfahren gegenüber den internen und externen Diensten authentisieren. Genauso können sich die internen und externen Dienste gegenüber dem Fahrzeug 14 beziehungsweise seinen Steuergeräten 28, 30, 32 authentisieren. Dies ist in Figur 1 durch die bidirektionalen Verbindungen 42 und 44 zwischen dem Fahrzeug 14 und dem externen Teilnehmer 38 sowie dem internen Dienstanbieter 40 dargestellt. Somit ergibt sich für die PKI insgesamt ein Vertrauenskreis 10, der sich immer auf die Root-CA 12 zurückführen lässt.

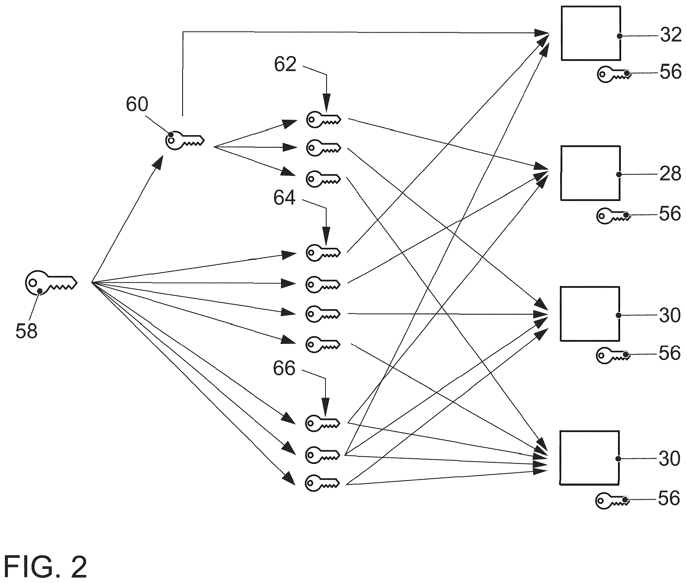

Anhand von Figur 2 wird im Folgenden die Schlüsselhierarchie und die Ableitung der Schlüssel beschrieben. Die Erzeugung kryptografischer Schlüssel für einen Teilnehmer des Vertrauenskreises unterscheidet generell zwischen zwei Arten von Schlüsseln. Schlüsseln, die individuell pro Steuergerät sind, und Schlüsseln, die innerhalb eines Fahrzeugs an mehrere Steuergeräte verteilt werden. Ein Steuergerät wird in dieser Beschreibung stellvertretend für einen Teilnehmer des Vertrauenskreises genannt. Es können auch andere Komponenten eines Fahrzeugs wie zum Beispiel andere Recheneinheiten verwendet werden.

Im Folgenden werden die grundlegenden Schlüssel des Vertrauenskreises beschrieben. Dargestellt sind mehrere Schlüssel, die einzelnen Steuergeräten 20, 30, 32 des Fahrzeugs zugewiesen werden beziehungsweise zugewiesen sind. Das Steuergerät 32 dient in diesem Beispiel als Mastersteuergerät für die Kommunikation und/oder Verschlüsselung. Das Mastersteuergerät kann als Fahrzeug-interne CA agieren für die Signierung von asymmetrischen Schlüsseln für andere Steuergeräte des Fahrzeugs oder als Zeitmaster für einen CAN Bus. Es ist ebenso möglich, das jedes Steuergerät seine eigene Steuergerät-interne CA ist.

Der initiale Schlüssel 56 ist der Schlüssel eines Teilnehmers des Vertrauenskreises, der durch den Lieferanten beziehungsweise Hersteller des Steuergeräts oder Teilnehmers eingebracht wird. Der initiale Schlüssel 56 dient zur Verschlüsselung und Signierung des Schlüsseldatensatzes bei der Erstbedatung des Steuergeräts. Er kann beim Bedatungsprozess durch einen Schlüssel speziell für dieses Steuergerät ersetzt werden. Dieser kann dann zur Verschlüsselung und Signierung aller weiteren Schlüsseldatensätze und für sonstige administrative Funktionen, die das Steuergerät hinsichtlich des Vertrauenskreises betreffen, dienen.

Die Bedatung durch den Lieferanten erfolgt in einer geschützten Umgebung, so dass ein Bekanntwerden der initialen Schlüssel 56 verhindert wird.

Aus Sicht des Fahrzeugherstellers wird zunächst ein Basisschlüssel 58 erzeugt. Der Basisschlüssel 58 wird in der Datenbank 18 hergeleitet und abgelegt. Die Ableitung aller anderen Schlüssel für alle Fahrzeuge oder eine Gruppe von Fahrzeugen erfolgt aus diesem Basisschlüssel 58.

So wird ein Masterkommunikationsschlüssel 60 aus dem Basisschlüssel 58 abgeleitet. Er dient dazu, in einem Master-Slave-Verbund sowohl Master als auch Slave mit gemeinsamen Schlüsseln auszustatten, so dass diese geschützt miteinander kommunizieren können.

Hierzu werden aus dem Masterkommunikationsschlüssel 60 weitere Kommunikationsschlüssel für Steuergeräte 62 abgeleitet und an die Slaves 28, 30 verteilt.

Aus dem Basisschlüssel 58 werden weiter Schlüssel für Steuergeräte 64 erzeugt. Ein solcher Schlüssel 64 ist im Fahrzeug ausschließlich diesem einen Steuergerät bekannt. Jede Funktion, die einen solchen Schlüssel benötigt, erhält ihren eigenen Schlüssel 64.

Aus dem Basisschlüssel 58 werden weiterhin Schlüssel für steuergeräteübergreifende Funktionen 66 generiert. Diese Schlüssel 66 werden aus der Fahrzeugidentifikationsnummer VIN oder FIN des Vertrauenskreises abgeleitet. Im Gegensatz zu Schlüsseln für Steuergeräte 64 wird ein steuergeräteübergreifender Schlüssel 66 an mehrere Teilnehmer verteilt und ermöglicht somit verteilten Funktionen Zugriff auf das gleiche Schlüsselmaterial. Der steuergeräteübergreifender Schlüssel 66 kann somit beispielsweise für funktionsbezogene geschützte Kommunikation innerhalb des Fahrzeugs verwendet werden.

Alle Bedatungsvorgänge werden im Backend, speziell in der Datenbank 18, verbucht und sind somit nachvollziehbar. Das Backend hält für jedes Fahrzeug eine Historie der verbauten Teilnehmer vor, welche alle Informationen enthält, um die in einem Teilnehmer enthaltenen Schlüssel erzeugen zu können. Die Bedatungsvorgänge umfassen sowohl die Erstbedatung als auch eine Mehrfachbedatung, das heißt eine erneute Bedatung eines bereits bedateten Teilnehmers. Eine Mehrfachbedatung ist zum Beispiel notwendig, falls ein bereits bedatetes Steuergerät in einen anderen Verbund von Teilnehmern getauscht werden soll, oder ein Schlüssel des Teilnehmers getauscht werden muss.

Die Bedatung von Teilnehmern des Vertrauenskreises erfolgt über verschlüsselte und signierte Schlüsseldatensätze. Über diese erhält das Steuergerät über sein kryptografisches Schlüsselmaterial hinaus Informationen über den Verbund, in dem es verbaut ist, sowie optional Meta-Informationen zu seinen Schlüsseln für die verwendende Applikation, sofern diese benötigt werden.

Zur Erstellung eines Verbunds oder Vertrauenskreises wird dem Backend mitgeteilt, welche Baugruppen beziehungsweise Steuergeräteklassen an dem Verbund teilhaben, welche Funktionalität in Form von Schlüsselmaterial bereitgestellt werden soll, wie die entsprechenden Ableitungspfade organisiert sind und welches die Fahrzeugidentifikationsnummer VIN oder FIN des Zielfahrzeugs ist. Erst dann kann das Backend die notwendigen Schlüssel herleiten und in Form von Schlüsseldatensätzen für die entsprechenden Teilnehmer bereitstellen. Die Konfiguration des Verbunds wird im Backend gespeichert. Anfragen für Schlüsseldatensätze für eine Steuergeräteklasse oder für Schlüssel, die nicht als Teil des Verbunds gemeldet wurden, werden abgelehnt.

Die Begriffe Baugruppen beziehungsweise Steuergeräteklassen sind hier beispielhaft als mögliche Teilnehmer des PKI-Vertrauenskreises 10 genannt. Weitere mögliche Teilnehmer sind zum Beispiel einzelne Bauteile, Steuergeräte oder sonstige Elemente und Bauteilgruppen. Eine Steuergeräteklasse ist zum Beispiel eine Klasse für Navigationssteuergeräte. Zu dieser Klasse gehören dann zum Beispiel mehrere oder alle Steuergeräte für Navigation, dies können dann Steuergeräte unterschiedlicher Bauart sein.

Nach der Erstellung eines Verbunds für ein Fahrzeug sind ihm noch keine Steuergeräte zugeordnet, sondern nur Steuergeräteklassen zugewiesen, die Teil des Verbunds sein werden. Bei einer Anfrage eines Schlüsseldatensatzes für eine Baugruppe, für die noch kein Steuergerät verbucht wurde, das heißt eine Erstanfrage, werden die nötigen Schlüssel im Backend auf Basis der dort hinterlegten Daten erzeugt. Danach wird das Steuergerät, für das die Anfrage gestellt wurde, mit seiner Seriennummer dem Verbund als zugehörig verbucht.

Die Modifizierung eines Verbunds ist das Tauschen eines bestehenden Teilnehmers des Verbunds gegen ein anderes Steuergerät. Bei Anfragen für einen Schlüsseldatensatz für eine Steuergeräteklasse, für die bereits ein Steuergerät als zugehörig zum Verbund verbucht wurde und die Seriennummer nicht mit der verbuchten Seriennummer übereinstimmt, wird ein Tauschprozess oder Austauschprozess initiiert. Vor der Berechnung der neuen Schlüssel, die an das Steuergerät übertragen werden, werden für alle Schlüssel, die das Steuergerät erhalten wird, und die getauscht werden müssen , deren Schlüsselidentitätszähler um 1 erhöht. Hieran wird festgestellt, dass der Schlüssel getauscht werden muss und es wird eine Zuordnung zum aktuell verwendeten Schlüssel möglich gemacht. Es wird garantiert, dass die Schlüssel des alten Teilnehmers im Fahrzeug nicht mehr gültig sind. Alle anderen Teilnehmer des Verbunds, die diese Schlüssel enthalten, müssen ebenfalls entsprechende Schlüsseldatensätze erhalten, die diese neuen Schlüssel erhalten.

Wenn ein Schlüsseldatensatz für einen Schlüssel eingebracht wird, akzeptiert das Steuergerät diesen Schlüsseldatensatz nur, falls der enthaltene Schlüsselidentitätszähler größer oder gleich dem aktuell gespeicherten Schlüsselanlernzähler ist.

Im Rahmen des Bedatungsprozesses kann ein Teilnehmer ein signiertes Zertifikat erhalten, das diesem Steuergerät entweder als interne Sub-CA dient oder direkt als Identifikationsmerkmal verwendet werden kann. Dieses Zertifikat wurde durch das Backend als Fahrzeugidentitäts-CA signiert.

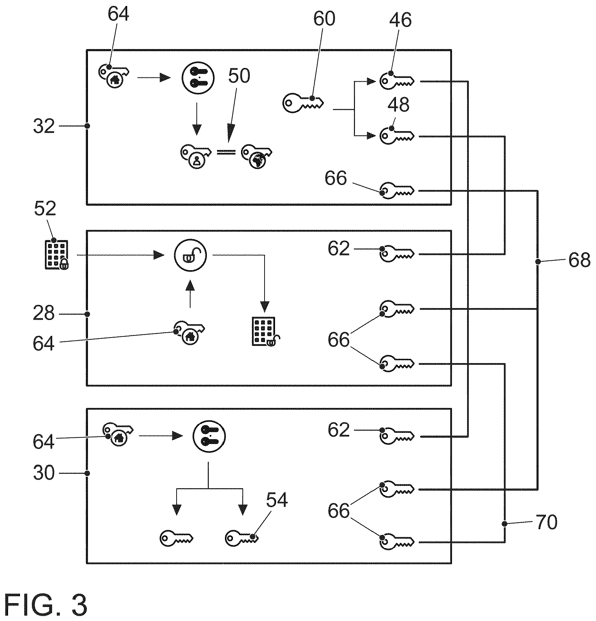

In Figur 3 sind die Steuergeräte 28, 30 und 32 sowie Funktionen von Schlüsseln dargestellt. Das Steuergerät 32 ist ein Mastersteuergerät und enthält deshalb einen Masterkommunikationsschlüssel 60. Aus dem Masterkommunikationsschlüssel 60 werden zwei Schlüssel oder Schlüsselpaare 46, 48 generiert zur Kommunikation mit den beiden Steuergeräten 28 und 30. Auf diese Weise können das Steuergerät 32 und das Steuergerät 28 mit dem Schlüssel 48 und dem Kommunikationsschlüssel 62 des Steuergeräts 28 miteinander kommunizieren. Entsprechend können das Steuergerät 32 und das Steuergerät 30 mit dem Schlüssel 46 und dem Kommunikationsschlüssel 62 des Steuergeräts 30 miteinander kommunizieren.

Über einen Schlüssel für steuergeräteübergreifende Funktionen 66 können alle drei Steuergeräte 28, 30 und 32 in einer Gruppe 68 miteinander geschützt kommunizieren und über einen weiteren Schlüssel für steuergeräteübergreifende Funktionen 66 können die beiden Steuergeräte 28 und 30 in einer Gruppe 70 miteinander geschützt kommunizieren. Wie zu sehen ist, sind pro Steuergerät mehrere Schlüssel beziehungsweise Schlüsselpaare für verschiedene Funktionen und/oder Kommunikationskreise vorhanden.

In den Steuergeräten 28, 30 und 32 sind weitere Beispiele von Funktionen der Schlüssel, hier von Schlüsseln für ein Steuergerät 64 gezeigt.

In dem Steuergerät 32 wird aus dem individuellen Schlüssel 64 zum Beispiel ein asymmetrisches ECC Schlüsselpaar 50 erzeugt. Verfahren auf Basis elliptischer Kurven werden als ECC-Verfahren (Elliptic Curve Cryptography) bezeichnet und erlauben schnellere und effizientere kryptografische Verfahren als das einfache Diffie-Hellman Verfahren. Das MasterSteuergerät 32 kann also aus seinem individuellen Schlüssel 64 weitere Schlüsselpaare für weitere, auch bei Bedatung des Steuergerätes unbekannte Aufgaben erzeugen.

In dem Steuergerät 28 werden zum Beispiel mit dem für dieses Steuergerät 28 individuellen Schlüssel 64 eingehende verschlüsselte Daten entschlüsselt und für das Steuergerät 28 benutzbar gemacht. Bei diesen Daten kann es sich um Anweisungen oder Nachrichten vom Backend, einen Schlüsseldatensatz oder weitere Informationen handeln.

In dem Steuergerät 30 werden aus dem für dieses Steuergerät 30 individuellen Schlüssel 64 weitere Schlüssel 54 erzeugt. Somit ist ersichtlich, dass auch ein Slave-Steuergerät 28, 30 neue Schlüssel oder Schlüsselpaare aus seinem jeweiligen -individuellen Schlüssel 64 erzeugen kann.

Von Vorteil ist, dass alle Schlüssel im Fahrzeug deterministisch sind und somit durch das Backend nachvollzogen werden können.

### Bezugszeichenliste

- 10: PKI-Vertrauenskreis
- 12: Root-CA
- 14: Fahrzeug
- 16: Fahrzeug CA
- 18: Schlüsseldatenbank
- 20: Backend-Einheit
- 22: Schlüssel
- 24: Zertifikat
- 26: Schlüsseldatensatz
- 28: Steuergerät
- 30: Steuergerät
- 32: Steuergerät
- 34: CA für mobile Onlinedienste
- 36: Bridge
- 38: externer Teilnehmer
- 40: interner Dienstanbieter
- 42: Verbindung
- 44: Verbindung
- 46: Schlüssel
- 48: Schlüssel
- 50: asymmetrisches ECC Schlüsselpaar
- 52: verschlüsselte Daten
- 54: weitere Schlüssel
- 56: initialer Schlüssel
- 58: Masterschlüssel
- 60: Masterkommunikationsschlüssel
- 62: Kommunikationsschlüssel
- 64: Schlüssel für ein Steuergerät
- 66: Schlüssel für steuergeräteübergreifende Funktionen
- 68: Gruppe
- 70: Gruppe

## Patentansprüche

1. Verfahren zur geschützten Kommunikation eines Fahrzeugs (14), **gekennzeichnet durch** die Schritte:
- Erzeugen eines Schlüsselpaars (22) bestehend aus privatem Schlüssel und öffentlichem Schlüssel und/oder eines oder mehrerer symmetrischer Schlüssel für das Fahrzeug (14) oder für ein Steuergerät (28, 30, 32) des Fahrzeugs (14) im Einflussbereich des Fahrzeugherstellers, wobei bei einer Erzeugung des Schlüsselpaares (22) und/oder des einen oder der mehreren symmetrischen Schlüssel für das Fahrzeug (14) oder für ein Steuergerät (28, 30, 32) des Fahrzeugs (14) eine Seriennummer des Fahrzeugs (14) und/oder des Steuergeräts (28, 30, 32) im Einflussbereich des Fahrzeugherstellers gespeichert wird;
- Erzeugen eines ersten Zertifikats (24) mit dem Schlüsselpaar (22),
- Einbringen des Schlüsselpaars (22) und des ersten Zertifikats (24) und/oder des oder der mehreren symmetrischen Schlüssel in das Fahrzeug (14) oder das Steuergerät (28, 30, 32), in Form eines verschlüsselten und signierten Schlüsseldatensatzes (26);
- Authentisieren des Fahrzeugs (14) oder des Steuergeräts (28, 30, 32) gegenüber einem neuen Kommunikationspartner (38, 40) durch die Generierung eines neuen Schlüsselpaares (50) für diesen Kommunikationsweg und das Absenden einer signierten Nachricht zusammen mit dem ersten Zertifikat (24), wobei ein Masterschlüssel (58) im Einflussbereich des Fahrzeugherstellers erzeugt wird und alle in dem Fahrzeug eingesetzten Schlüssel durch deterministische Ableitung aus dem Masterschlüssel (58) erzeugt werden, wobei bei einer erneuten Anfrage nach einem Schlüsselpaar und/oder einem Schlüssel, wenn eine Seriennummer des Fahrzeugs (14) oder des Steuergeräts (28, 30, 32) nicht mit der gespeicherten Seriennummer übereinstimmt, vor der Berechnung eines neuen, an das Fahrzeug (14) oder an das Steuergerät (28, 30, 32) zu übertragenden Schlüsselpaares und/oder Schlüssels, ein Schlüsselidentitätszähler des Schlüsselpaares und/oder Schlüssels hochgezählt und ein neuer Schlüssel damit erzeugt wird, wobei das Fahrzeug (14) oder das Steuergerät (28, 30, 32) das neue Schlüsselpaar und/oder den oder die mehreren Schlüssel nur akzeptiert, wenn der enthaltene Schlüsselidentitätszähler größer oder gleich dem aktuell gespeicherten Schlüsselidentitätszähler ist, und
- Authentisieren des neuen Kommunikationspartners (38, 40) gegenüber dem Fahrzeug oder dem Steuergerät (28, 30, 32) mit einer signierten Nachricht und einem öffentlichen Schlüssel des neuen Kommunikationspartners (38, 40), die der neue Kommunikationspartner (38, 40) basierend auf einer Zertifizierung durch den Fahrzeughersteller erstellt.

2. Verfahren nach Anspruch 1, **dadurch gekennzeichnet, dass** in dem Schlüsseldatensatz (26) Informationen betreffend einer Identifikationsnummer des Fahrzeugs (14) und/oder des Steuergeräts (28, 30, 32) und/oder der Schlüsselart enthalten sind.

3. Verfahren nach einem der vorhergehenden Ansprüche, **dadurch gekennzeichnet, dass** bei der Herstellung eines Steuergeräts (28, 30, 32) des Fahrzeugs (14) ein initialer Schlüssel (56) im Steuergerät (28, 30, 32) hinterlegt wird und dass der initiale Schlüssel (56) durch das Schlüsselpaar (22) und/oder den symmetrischen Schlüssel ungültig wird.

4. Verfahren nach einem der vorhergehenden Ansprüche, **dadurch gekennzeichnet, dass** ein Schlüssel für steuergeräteübergreifende Funktionen erzeugt und in mehrere Steuergeräte (28, 30, 32) des Fahrzeuges (14) eingebracht wird.

5. Verfahren nach einem der vorhergehenden Ansprüche, **dadurch gekennzeichnet, dass** mehrere Schlüsselpaare und/oder symmetrische Schlüssel in ein Steuergerät (28, 30, 32) des Fahrzeuges (14) eingebracht werden.

6. Verfahren nach einem der vorhergehenden Ansprüche, **dadurch gekennzeichnet, dass** der neue Kommunikationspartner ein weiteres Steuergerät (28, 30, 32) im Fahrzeug (14) oder eine zu dem Fahrzeug externe Einrichtung (38, 40) ist.

7. Verfahren nach einem der vorhergehenden Ansprüche, **dadurch gekennzeichnet, dass** der Einflussbereich des Fahrzeugherstellers einen Produktionsort des Fahrzeugs (14) und/oder ein Backend des Herstellers umfasst.

8. Verfahren nach einem der vorhergehenden Ansprüche, **dadurch gekennzeichnet, dass** ein Root-Zertifikat des Herstellers in das Fahrzeug eingebracht wird und dass das Root-Zertifikat an den neuen Kommunikationspartner (38, 40) gesandt wird.

9. Verfahren nach Anspruch 8, **dadurch gekennzeichnet, dass** eine Zertifizierungsstelle des Fahrzeugherstellers ein Hersteller-Zertifikat erzeugt und an den neuen Kommunikationspartner (38, 40) überträgt und dass der neue Kommunikationspartner (38, 40) das vom Fahrzeug (14) erhaltene Zertifikat mit dem Root-Zertifikat, dem Hersteller-Zertifikat, und dem Zertifikat und der Signatur der Nachricht überprüft.

## Claims

1. Method for protected communication by a vehicle (14), **characterized by** the steps of:
- generating a key pair (22) consisting of a private key and a public key and/or one or more symmetric keys for the vehicle (14) or for a control unit (28, 30, 32) of the vehicle (14) in the area of influence of the vehicle manufacturer, wherein a generating of the key pair (22) and/or of the one or more symmetric keys for the vehicle (14) or for a control unit (28, 30, 32) of the vehicle (14) results in a serial number of the vehicle (14) and/or of the control unit (28, 30, 32) being stored in the area of influence of the vehicle manufacturer;
- generating a first certificate (24) using the key pair (22),
- introducing the key pair (22) and the first certificate (24) and/or the symmetric key or the multiple symmetric keys into the vehicle (14) or the control unit (28, 30, 32), in the form of an encrypted and signed key data record (26);
- authenticating the vehicle (14) or the control unit (28, 30, 32) to a new communication partner (38, 40) by generating a new key pair (50) for this communication path and sending a signed message together with the first certificate (24), wherein a master key (58) is generated in the area of influence of the vehicle manufacturer and all of the keys used in the vehicle are generated by deterministic derivation from the master key (58), wherein a fresh request for a key pair and/or a key, if a serial number of the vehicle (14) or of the control unit (28, 30, 32) is not concordant with the stored serial number, results in the calculation of a new key pair and/or key to be transmitted to the vehicle (14) or to the control unit (28, 30, 32) being preceded by a key identity counter of the key pair and/or key being incremented and a new key being generated thereby, wherein the vehicle (14) or the control unit (28, 30, 32) accepts the new key pair and/or the key or the multiple keys only if the included key identity counter is greater than or equal to the currently stored key identity counter, and
- authenticating the new communication partner (38, 40) to the vehicle or the control unit (28, 30, 32) using a signed message and a public key of the new communication partner (38, 40), which are produced by the new communication partner (38, 40) on the basis of a certification by the vehicle manufacturer.

2. Method according to Claim 1, **characterized in that** the key data record (26) contains information relating to an identification number of the vehicle (14) and/or of the control unit (28, 30, 32) and/or the type of key.

3. Method according to either of the preceding claims, **characterized in that** the manufacture of a control unit (28, 30, 32) of the vehicle (14) results in an initial key (56) being stored in the control unit (28, 30, 32) and **in that** the initial key (56) becomes invalid as a result of the key pair (22) and/or the symmetric key.

4. Method according to one of the preceding claims, **characterized in that** a key for cross-control-unit functions is generated and introduced into multiple control units (28, 30, 32) of the vehicle (14).

5. Method according to one of the preceding claims, **characterized in that** multiple key pairs and/or symmetric keys are introduced into a control unit (28, 30, 32) of the vehicle (14).

6. Method according to one of the preceding claims, **characterized in that** the new communication partner is a further control unit (28, 30, 32) in the vehicle (14) or a device (38, 40) external to the vehicle.

7. Method according to one of the preceding claims, **characterized in that** the area of influence of the vehicle manufacturer comprises a production site for the vehicle (14) and/or a backend of the manufacturer.

8. Method according to one of the preceding claims, **characterized in that** a root certificate of the manufacturer is introduced into the vehicle and **in that** the root certificate is sent to the new communication partner (38, 40).

9. Method according to Claim 8, **characterized in that** a certification authority of the vehicle manufacturer generates a manufacturer certificate and transmits it to the new communication partner (38, 40) and **in that** the new communication partner (38, 40) checks the certificate received from the vehicle (14) using the root certificate, the manufacturer certificate, the certificate and the signature of the message.

## Revendications

1. Procédé de communication protégée dans un véhicule (14), **caractérisé par** les étapes consistant à :
- générer une paire de clés (22) composée d'une clé privée et d'une clé publique et/ou d'une ou de multiples clés symétriques pour le véhicule (14) ou pour un appareil de commande (28, 30, 32) du véhicule (14) dans la zone d'influence du constructeur de véhicule, dans lequel, lors de la génération de la paire de clés (22) et/ou de ladite clé ou desdites multiples clés symétrique(s) pour le véhicule (14) ou pour un appareil de commande (28, 30, 32) du véhicule (14), un numéro de série du véhicule (14) et/ou de l'appareil de commande (28, 30, 32) est stocké dans la zone d'influence du constructeur de véhicule ;
- générer un premier certificat (24) au moyen de la paire de clés (22),
- introduire la paire de clés (22) et le premier certificat (24) et/ou ladite clé ou lesdites multiples clés symétrique(s) dans le véhicule (14) ou l'appareil de commande (28, 30, 32), sous la forme d'un jeu de données de clés crypté et signé (26) ;
- authentifier le véhicule (14) ou l'appareil de commande (28, 30, 32) vis-à-vis d'un nouveau partenaire de communication (38, 40) en générant une nouvelle paire de clés (50) pour cette voie de communication et en envoyant un message signé en association avec le premier certificat (24), dans lequel une clé maîtresse (58) est générée dans la zone d'influence du constructeur de véhicule et toutes les clés utilisées dans le véhicule sont générées par déduction déterministe de la clé maîtresse (58), dans lequel, lors d'une nouvelle demande de paire de clés et/ou de clé, lorsqu'un numéro de série du véhicule (14) ou de l'appareil de commande (28, 30, 32) ne correspond pas au numéro de série stocké, avant le calcul d'une nouvelle paire de clés et/ou d'une nouvelle clé à transmettre au véhicule (14) ou à l'appareil de commande (28, 30, 32), un compteur d'identité de clé de la paire de clés et/ou de la clé est incrémenté et une nouvelle clé est générée au moyen d celui-ci, dans lequel le véhicule (14) ou l'appareil de commande (28, 30, 32) n'accepte la nouvelle paire de clés et/ou ladite clé ou lesdites multiples clés que lorsque le compteur d'identité de clé contenu est supérieur ou égal au compteur d'identité de clé actuellement stocké, et
- authentifier le nouveau partenaire de communication (38, 40) vis-à-vis du véhicule ou de l'appareil de commande (28, 30, 32) au moyen d'un message signé et d'une clé publique du nouveau partenaire de communication (38, 40), que le nouveau partenaire de communication (38, 40) crée sur la base d'une certification par le constructeur de véhicule.

2. Procédé selon la revendication 1, **caractérisé en ce que** l'ensemble de données de clés (26) contient des informations concernant un numéro d'identification du véhicule (14) et/ou de l'appareil de commande (28, 30, 32) et/ou du type de clé.

3. Procédé selon l'une des revendications précédentes, **caractérisé en ce que**, lors de la fabrication d'un appareil de commande (28, 30, 32) du véhicule (14), une clé initiale (56) est stockée dans l'appareil de commande (28, 30, 32) et **en ce que** la clé initiale (56) est invalidée par la paire de clés (22) et/ou par la clé symétrique.

4. Procédé selon l'une des revendications précédentes, **caractérisé en ce qu'**une clé destinée à des fonctions couvrant plusieurs appareils de commande est générée et introduite dans de multiples appareils de commande (28, 30, 32) du véhicule (14).

5. Procédé selon l'une des revendications précédentes, **caractérisé en ce que** de multiples paires de clés et/ou de clés symétriques sont introduites dans un appareil de commande (28, 30, 32) du véhicule (14).

6. Procédé selon l'une des revendications précédentes, **caractérisé en ce que** le nouveau partenaire de communication est un autre appareil de commande (28, 30, 32) dans le véhicule (14) ou un dispositif (38, 40) extérieur au véhicule.

7. Procédé selon l'une des revendications précédentes, **caractérisé en ce que** la zone d'influence du constructeur de véhicule comprend un site de production du véhicule (14) et/ou un système central du constructeur.

8. Procédé selon l'une des revendications précédentes, **caractérisé en ce qu'**un certificat racine du constructeur est introduit dans le véhicule et **en ce que** le certificat racine est envoyé au nouveau partenaire de communication (38, 40).

9. Procédé selon la revendication 8, **caractérisé en ce qu'**une autorité de certification du constructeur de véhicule génère un certificat du constructeur et le transmet au nouveau partenaire de communication (38, 40) et **en ce que** le nouveau partenaire de communication (38, 40) vérifie le certificat reçu en provenance du véhicule (14) au moyen du certificat racine, du certificat du constructeur, ainsi que du certificat et de la signature du message.
